Europäisches Patentamt

European Patent Office

Office européen des brevets

(19)

(11) Numéro de publication : **0 544 564 A1**

(12) **DEMANDE DE BREVET EUROPEEN**

(21) Numéro de dépôt : **92403109.9**

(22) Date de dépôt : **19.11.92**

(51) Int. Cl.⁵ : **H04J 14/08**

(30) Priorité : **26.11.91 FR 9114547**

(43) Date de publication de la demande :
**02.06.93 Bulletin 93/22**

(84) Etats contractants désignés :
**CH DE ES GB IT LI**

(71) Demandeur : **THOMSON-CSF**
**51, Esplanade du Général de Gaulle**
**F-92800 Puteaux (FR)**

(72) Inventeur : **Eumurian, Grégoire,**
**THOMSON-CSF**
**SCPI, 50, rue J.P. Timbaud**
**F-92402 Courbevoie Cedex (FR)**

(74) Mandataire : **Albert, Claude et al**
**THOMSON-CSF SCPI B.P. 329, 50, rue J.P.**
**Timbaud**
**F-92402 COURBEVOIE CEDEX (FR)**

(54) **Dispositif de transmission optique de plusieurs signaux analogiques fugitifs à large bande passante.**

(57)    L'invention concerne un dispositif de transmission optique de plusieurs signaux analogiques fugitifs à large bande passante.

   Ce dispositif comprend (N-1) lignes à retard analogique à large bande constituées par des tronçons de fibre optique (Fb2 à Fb4) de longueur différente dans lesquelles (N-1) des signaux fugitifs sont respectivement envoyés par l'intermédiaire d'émetteurs optiques (32 à 34, 52 à 54). Un coupleur optique (25), un récepteur optique (Ro1) et un commutateur électrique (41) permettent de multiplexer dans le temps les signaux retardés et le signal non retardé. Le signal multiplexé est transmis par une liaison unique à fibre optique (35 à 39, Fb1). Des interrupteurs (42 à 44) permettent d'éviter tout chevauchement des signaux multiplexés.

   L'invention s'applique notamment à l'analyse de phénomènes fugitifs tels que foudre, impulsion électromagnétique etc ...

FIG.2

La présente invention se rapporte à un dispositif de transmission optique de plusieurs signaux analogiques fugitifs à large bande passante.

L'étude de phénomènes comme la foudre, les impulsions électromagnétiques, les décharges électrostatiques etc... conduit à la mesure de signaux analogiques à large bande (plusieurs centaines de mégahertz) qui sont générés par différents aspects du même phénomène : champ électrique, champ magnétique, courant, tension etc ...

Ces signaux analogiques se caractérisent par une durée très limitée dans le temps, de quelques dizaines de nanosecondes à quelques microsecondes (d'où l'appellation de signaux fugitifs) et par une quasi-simultanéité due à leur origine commune.

Du fait que ces phénomènes peuvent avoir un effet destructeur important, il est souvent nécessaire d'effectuer l'analyse des signaux à une distance suffisante du phénomène et d'assurer un isolement galvanique entre le phénomène étudié et le système d'analyse.

Un des moyens les mieux adaptés pour cela est l'utilisation de transmissions par fibre optique. Lorsqu'il s'agit de transmettre des signaux à très large bande sur de grandes distances (plusieurs kilomètres à quelques centaines de kilomètres), le seul moyen analogique pour une bonne transmission par fibre optique consiste à utiliser un laser de préférence de type DFB ("Distributed Feed Back" dans la littérature anglo-saxonne) avec un isolateur optique et une liaison optique par fibre monomode.

Ce type de liaison permet, par exemple, d'assurer une bande passante d'environ 20 Hz à 2 GHz avec un rapport signal à bruit de plus de 56 dB.

Malheureusement le coût d'une telle liaison est élevé. Si on utilise une telle liaison pour transmettre chacun des signaux fugitifs, le coût devient complètement prohibitif dès qu'il faut transmettre quatre ou cinq signaux en utilisant donc autant de liaisons.

Une solution connue pour transmettre plusieurs signaux permanents de bande passante limitée consiste à utiliser un seul canal de transmission constituée d'une liaison optique décrite ci-dessus et y placer les différents signaux à transmettre.

Dans ce but, on peut soit décaler en fréquence les différents signaux puis les juxtaposer, soit utiliser des porteuses multiples modulées en amplitude, fréquence ou phase, chaque signal modulant une porteuse différente. A la réception, dans le premier cas on effectue une opération de décalage inverse pour récupérer les différents signaux et, dans le second cas, chaque signal est démodulé en accord avec sa porteuse.

Dans tous les cas, on aboutit à une électronique qui deviendrait très difficile à réaliser pour des signaux à large bande passante.

Un objet de l'invention est donc un dispositif de transmission optique de N signaux analogiques fugitifs sensiblement simultanés à large bande passante, du type utilisant un moyen de liaison comportant une fibre optique unique à large bande pour la transmission à distance de tous ces signaux et des moyens de multiplexage desdits N signaux du côté émission de la fibre, lesdits moyens de multiplexage comportant des moyens de conversion électro-optiques pour convertir au moins (N-1) desdits signaux fugitifs en signaux lumineux et des lignes à retard optiques à large bande pour imposer auxdits signaux lumineux des retards respectifs différents, ledit dispositif étant caractérisé en ce que ledit moyen de liaison comprend un émetteur optique de grande qualité pour fournir les signaux optiques à transmettre par ladite fibre optique unique et en ce que lesdits moyens de multiplexage comprennent en outre des moyens de combinaison et de conversion opto-électrique pour former par multiplexage dans le temps, à partir desdits signaux lumineux retardés et le cas échéant du signal fugitif non retardé, un signal électrique résultant appliqué pour transmission audit émetteur optique.

Un autre objet de l'invention est un dispositif de transmission qui utilise une seule liaison optique de qualité sur laquelle les signaux fugitifs à large bande passante sont insérés par multiplexage dans le temps en utilisant des lignes à retard à large bande à fibres optiques.

Selon l'invention, il est donc prévu un dispositif de transmission optique de N signaux analogiques fugitifs sensiblement simultanés à large bande passante, du type utilisant un moyen de liaison comportant une fibre optique unique à large bande pour la transmission à distance de tous ces signaux et des moyens de multiplexage desdits N signaux du côté émission de la fibre, ledit dispositif étant caractérisé en ce que lesdits moyens de multiplexage comprennent :

- des moyens de conversion électro-optiques pour convertir au moins (N-1) desdits signaux fugitifs en signaux lumineux ;
- des lignes à retard optiques à large bande pour imposer auxdits signaux lumineux des retards respectifs différents ; et
- des moyens de combinaison et de conversion opto-électrique pour former par multiplexage dans le temps, à partir desdits signaux lumineux retardés et le cas échéant du signal fugitif non retardé, un signal électrique résultant appliqué pour transmission audit moyen de liaison.

L'invention sera mieux comprise et d'autres caractéristiques et avantages apparaîtront à l'aide de la description ci-après et des dessins joints où :

- la figure 1 représente des diagrammes explicatifs de solutions connues ;
- la figure 2 est le schéma de principe d'une première variante du dispositif selon l'invention ;
- la figure 3 est un diagramme de signaux utilisés dans le dispositif de la figure 2 ;

- la figure 4 montre un schéma d'un élément du dispositif selon l'invention ;
- la figure 5 montre des schémas d'un composant utilisé dans le dispositif selon l'invention ;
- la figure 6 est le schéma d'une première variante du dispositif selon l'invention ;
- la figure 7 montre un schéma d'élément du dispositif de la figure 6 ;
- la figure 8 est le schéma d'une autre variante du dispositif selon l'invention ;
- les figures 9 et 10 représentent des diagrammes de signaux utilisés dans le dispositif de la figure 8 ; et
- la figure 11 montre un schéma d'un élément du dispositif de la figure 8.

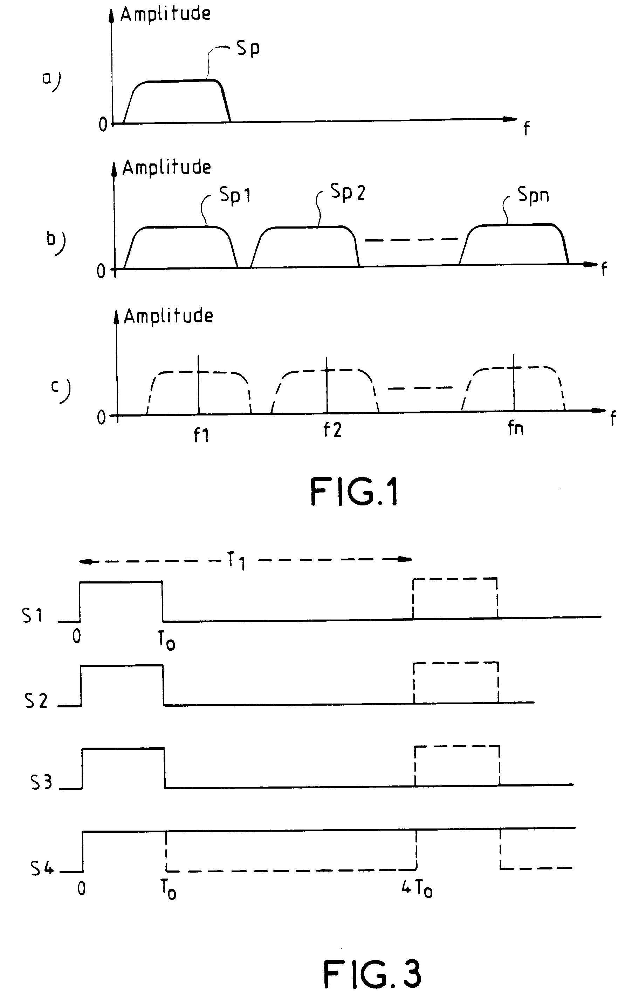

La figure 1 montre des diagrammes explicatifs des solutions connues pour la transmission de plusieurs signaux sur une seule liaison. La courbe a) montre le spectre Sp d'un de ces signaux. La courbe b) explicite le cas où plusieurs signaux à transmettre sont décalés en fréquence puis juxtaposés. Les spectres Sp1, Sp2 ... Spn sont dérivés du spectre Sp et correspondent respectivement à n signaux décalés en fréquence qui peuvent donc être juxtaposés sans intermodulation à condition d'utiliser à la réception des filtres pour séparer les spectres.

De même la courbe c) illustre le cas où chaque signal module une porteuse f1, f2 ... fn différente, chaque signal étant démodulé à la réception en accord avec sa porteuse.

Comme on l'a déjà dit, ces différentes solutions impliquent pour des signaux à large bande passante l'emploi d'une électronique très difficile à réaliser et de filtres pour séparer les spectres.

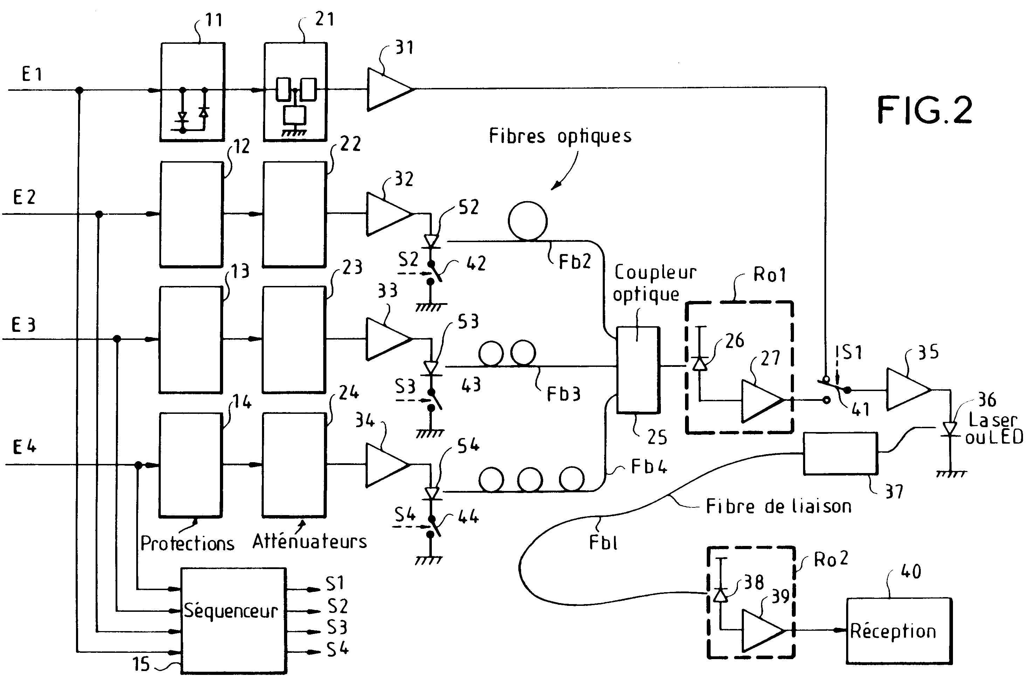

La figure 2 représente le schéma d'une première variante du dispositif de transmission selon l'invention. Les signaux fugitifs à transmettre sont supposés ici, à titre d'exemple, au nombre de quatre appliqués respectivement sur les entrées E1 à E4. Ces signaux sont appliqués, via des circuits de protection respectifs 11 à 14 et des atténuateurs respectifs 21 à 24, à des amplificateurs 31 à 34. Tous ces amplificateurs sauf le premier font partie d'émetteurs optiques utilisant des diodes électroluminescentes (LED) ou éventuellement des lasers 52 à 54. Ces émetteurs transforment les signaux fugitifs correspondants en signaux lumineux injectés dans des fibres optiques Fb2 à Fb4 dont les longueurs diffèrent.

Les diodes LED ou lasers 52 à 54 sont connectés en série avec des interrupteurs 42 à 44 commandés par des signaux S2 à S4 respectivement. Les fibres optiques Fb2 à Fb4 constituent des lignes à retard analogiques de très grande bande passante et de durée élevée (plusieurs centaines de mégahertz pour la bande et plusieurs microsecondes pour le retard).

Si $T_o$ est la durée minimum de la partie initiale des signaux fugitifs que l'on veut transmettre, on choisit de préférence la durée du retard apporté par la première fibre Fb2 égal à $T_o$ et les autres fibres apportent des retards s'accroissant de $T_o$ d'une fibre à la suivante. Ceci permet, comme on le verra, de multiplexer ensuite dans le temps les signaux fugitifs.

La première fibre optique a une longueur $L_o$ telle que :

$$T_o = \frac{L_o}{V}$$

où V est la vitesse de propagation de la lumière dans la fibre (V ≃ 200000 km/s). Ainsi une longueur de 200 m apporte un retard de 1 μs.

Le choix entre diodes électroluminescentes ou laser pour les émetteurs optiques dépend essentiellement de la bande passante des signaux. Jusqu'à par exemple 200 à 250 MHz on choisit de préférence une diode LED pour sa grande dynamique et son très faible bruit. Au delà il est préférable et même nécessaire d'utiliser des diodes laser.

Les fibres optiques peuvent être de type multimode ou monomode selon la bande passante, le retard et la dynamique souhaités. Pour les grands retards et une bande passante étendue, la fibre monomode est préférée.

La longueur d'onde utilisée est variable selon les composants utilisés, par exemple 850, 1300, 1550 nm etc ... A 1300 nm, on a un minimum de dispersion chromatique et on obtient des retards longs à forte bande passante. La longueur d'onde de 1550 nm est plus intéressante pour les retards très longs à bande passante plus faible.

Les signaux fugitifs retardés optiquement sont combinés par un coupleur optique 25 et le signal lumineux de sortie du coupleur attaque un récepteur optique Ro1 comportant une photodiode 26 et un amplificateur 27 pour convertir ledit signal lumineux en un signal électrique intermédiaire appliqué à une borne d'un commutateur 41. Ce commutateur est commandé par un signal de commande S1 et reçoit sur sa seconde entrée le premier signal fugitif non retardé venant de l'amplificateur 31. La sortie du commutateur 41 est appliquée à l'entrée de la liaison unique de très bonne qualité. Celle-ci comporte de manière connue un émetteur optique comprenant l'amplificateur 35 et la diode laser DFB 36, l'isolateur 37, la fibre monomode Fb1 puis le récepteur optique Ro2 comportant l'amplificateur 39 et la photodiode 38. Le signal électrique obtenu est appliqué aux circuits de réception et d'utilisation 40.

Bien entendu, pour des bandes passantes et des dynamiques plus faibles, on peut utiliser une diode laser du type FP (Fabry-Perrot) ou même une diode LED et une fibre mono ou multimode (pour des diodes lasers à dynamique faible ou diodes LED, l'isolateur peut être supprimé).

Enfin, le dispositif selon l'invention comporte également un déclencheur-séquenceur 15 recevant les divers signaux fugitifs présents sur les entrées E1 à E4 et fournissant les signaux de commande S1 à S4.

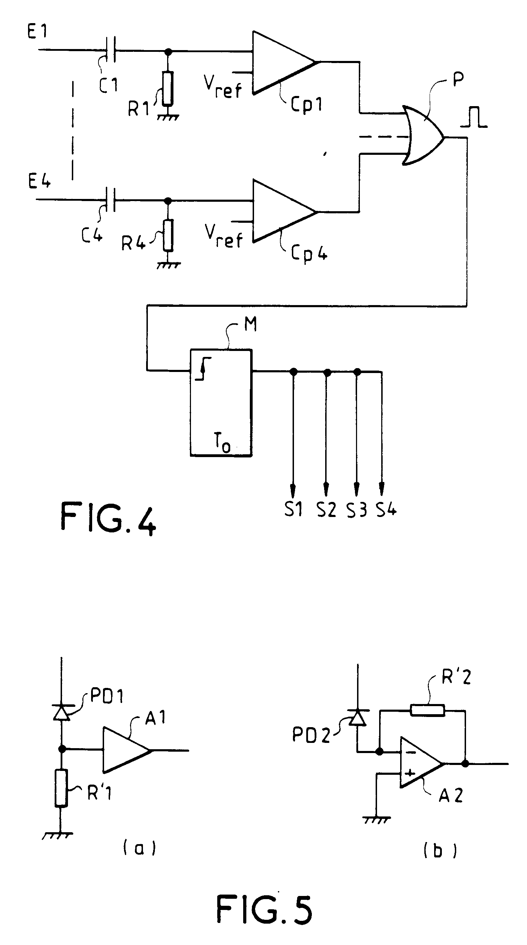

Le fonctionnement du dispositif va être expliqué en se référant également aux diagrammes de signaux de la figure 3. Lors de l'apparition d'au moins un des signaux fugitifs qui détermine l'instant zéro, les (N-2), ici 2, interrupteurs 42 et 43 reçoivent un signal de fermeture S2, S3 de durée $T_o$, puis repassent en position ouverte, ce qui coupe l'application des signaux d'entrée aux fibres optique Fb2, Fb3. L'interrupteur 44 reçoit, dans le mode de réalisation envisagé ici, un signal de fermeture permanent S4 (Figure 3), ceci dans le but de transmettre le signal le plus lent dont la durée pourrait largement excéder $T_o$, par exemple dans le cas d'une décroissance lente (dans ce cas l'interrupteur S4 peut d'ailleurs être remplacé par un court-circuit).

Il est clair cependant que l'interrupteur 44 pourrait aussi être commandé comme les autres interrupteurs 42 et 43.

Pendant le temps $T_o$ à partir de l'instant initial, les signaux fugitifs des entrées E2 à E4 sont convertis en signaux lumineux puis retardés et combinés dans le coupleur 25. L'ouverture des interrupteurs 42, 43 permet d'empêcher que la suite éventuelle des signaux fugitifs correspondants ne viennent interférer dans le coupleur avec les signaux suivants. On évite ainsi tout recouvrement, tout en pouvant transmettre un dernier signal plus long. Les signaux multiplexés dans le temps et retardés ainsi obtenus sont, après conversion par le récepteur optique Ro1, multiplexés avec le signal non retardé de la voie 1 par le commutateur 41, qui est commandé par un signal de commande S1 assurant le passage du signal de la voie 1 entre les temps O et $T_o$ puis le passage du signal intermédiaire issu de Ro1 pendant le reste du temps.

Après transmission dans la liaison unique à fibre optique 35 à 39, Fb1, le signal multiplexé reçu peut soit être traité et analysé par un dispositif unique soit subir une séparation des signaux fugitifs individuels par démultiplexage de manière connue dans les circuits d'utilisation 40.

Une variante de fonctionnement consiste, lorsque les signaux fugitifs ont une décroissance plus lente et s'étendent donc largement au delà de $T_o$, à effectuer à l'aide des signaux de commande S1 à S4 une transmission échantillonnée de chaque voie. Ceci est symbolisé sur la figure 3 par les signaux représentés en pointillé. Au bout d'un temps T1 qui est la période d'échantillonnage et qui est au moins égal à 4 $T_o$, le séquenceur 15 fournit à nouveau une commande de commutation de durée $T_o$ aux interrupteurs 42 à 44 et au commutateur 41. Il faut noter qu'ici le dernier signal fugitif est traité et échantillonné comme les autres.

Comme on le voit, la première impulsion des signaux de commande S1 à S4 permet la transmission du front avant très raide des signaux fugitifs, les impulsions suivantes permettent la transmission échantillonnée de la suite de ces signaux fugitifs.

La plupart du temps, les signaux fugitifs étant analysés par un dispositif d'échantillonnage longue durée de 5000 à 100000 points, l'arrivée multiplexée des signaux est un avantage car elle permet d'utiliser un seul échantillonneur.

La figure 4 montre un schéma possible de circuit déclencheur-séquenceur 15 dans le premier cas envisagé ci-dessus sans échantillonnage.

Les différents signaux fugitifs des entrées E1 à E4 sont envoyés respectivement à des circuits différenciateurs R1-C1 à R4-C4 qui fournissent un pic de tension à l'instant d'apparition du front avant des signaux fugitifs correspondants. Ces pics sont mis en forme par des comparateurs Cp1 à Cp4 recevant sur leur autre entrée un signal de référence $V_{ref}$. Une porte OU, P, reçoit sur ses entrées les impulsions délivrées par les comparateurs et fournit sur sa sortie une impulsion de déclenchement à l'instant d'apparition des signaux fugitifs. Cette impulsion est envoyée à l'entrée de déclenchement d'un circuit monostable M, dont la durée d'impulsion est $T_o$ et dont la sortie fournit donc les signaux de commande S1 à S4. Dans le cas où on souhaite transmettre d'une manière permanente le signal de la quatrième voie, le commutateur 44 étant remplacé par un court-circuit, la sortie du monostable M fournit les signaux S1 à S3.

La figure 5 illustre de manière plus précise des schémas connus de récepteurs optiques à photodiodes, les récepteurs Ro1 et Ro2 ayant été sur la figure 2 simplement symbolisés par une diode et un amplificateur en série.

Les photodiodes PD1 ou PD2 (Figure 5) sont de type PIN ou APD (diode à avalanche).

Dans le montage (a), le signal prélevé aux bornes de la résistance R'1 en série avec la photodiode est envoyé sur un amplificateur A1 à impédance élevée.

Le montage (b) est du type transimpédance. La photodiode PD2 est reliée directement à une entrée de l'amplificateur A2 et une résistance de contre-réaction R'2 est connectée entre cette entrée et la sortie. Ce montage permet d'obtenir la meilleure dynamique, surtout avec des résistances R'2 de forte valeur, par exemple de 5 à 20 k .

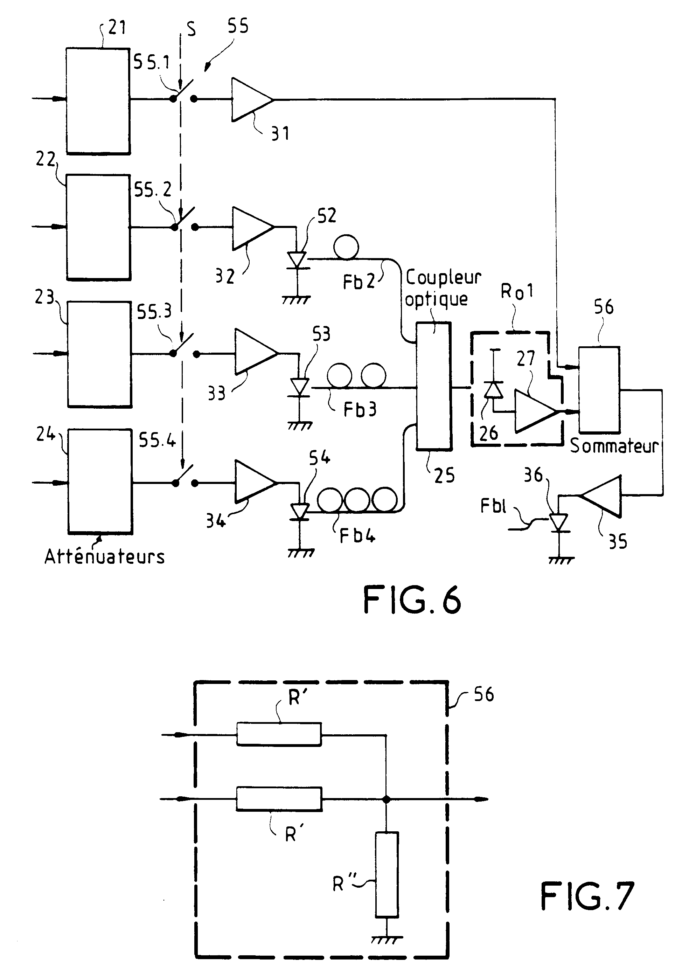

La figure 6 montre une première variante du dispositif de la figure 2. Sur cette figure 6, on n'a représenté pour l'essentiel que les parties modifiées et certaines parties du schéma de la figure 2 permettant de comprendre leur insertion dans le schéma général de cette figure 2. Les mêmes numéros de référence renvoient aux mêmes éléments que sur la figure 2. Les interrupteurs 42 à 44 ont été remplacés par un interrupteur multiple 55 dont les interrupteurs élémentaires 55.1 à 55.4 sont respectivement disposés dans les quatre voies de signaux fugitifs entre les atténuateurs 21 à 24 et les amplificateurs correspondants 31 à 34. L'interrupteur 55 est fermé de 0 à $T_o$ sous la

commande du signal S. Par ailleurs, le commutateur 41 a été remplacé par un circuit sommateur 56 recevant le premier signal fugitif non retardé et le signal intermédiaire venant de l'amplificateur 27. En raison de l'action de l'interrupteur 55, ces signaux ne se recouvrent pas et sont sommés par le circuit sommateur 56 pour donner le signal multiplexé délivré à l'amplificateur 35 de la liaison unique.

Naturellement ici aussi l'interrupteur 55.4 pourrait être remplacé par un court-circuit de façon à permettre la transmission d'un signal long ou à évolution lente.

Pour la commande des interrupteurs, on peut utiliser le déclencheur-séquenceur 15 de la figure 4, sans ou avec la commande de l'interrupteur 55.4.

La figure 7 montre un schéma possible de circuit sommateur 56. Ce sommateur est un sommateur à deux résistances d'entrée R' identiques et une résistance de sommation R".

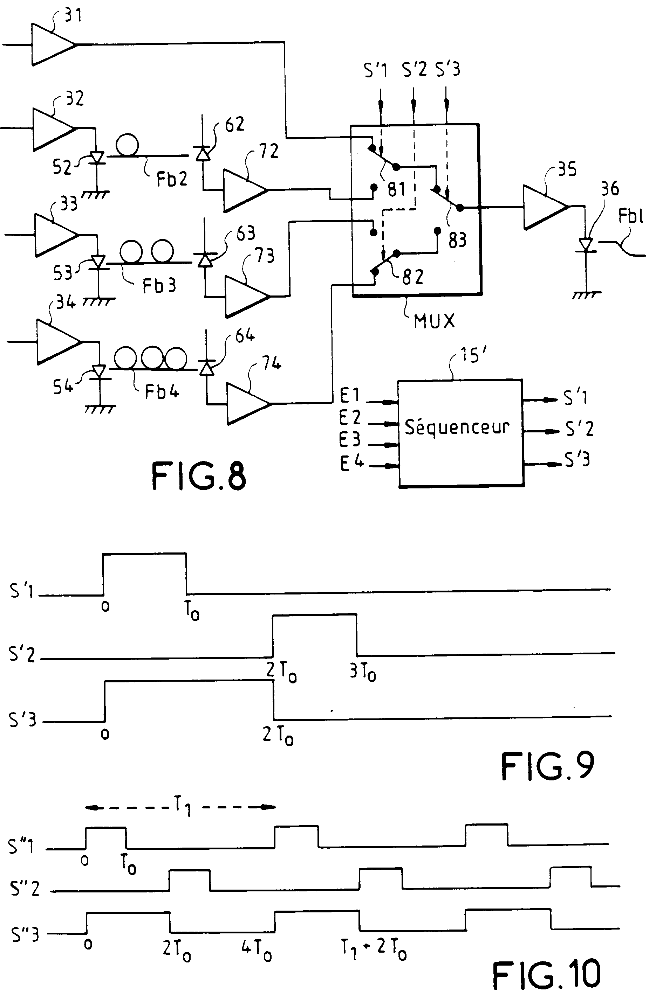

La figure 8 représente le schéma partiel d'une autre variante de dispositif selon l'invention où on a remplacé le coupleur optique par plusieurs récepteurs optiques et un multiplexeur électrique. Sur cette figure 8, comme pour la figure 6, on n'a représenté pour l'essentiel que les parties modifiées et certaines parties du schéma de la figure 2 permettant de comprendre leur insertion dans le schéma général de cette figure 2.

Les émetteurs optiques 32 à 34, 52 à 54 ne sont plus en série avec des interrupteurs. On retrouve sur ce schéma les lignes à retard à fibre optique Fb2 à Fb4. Chaque fibre optique est suivie d'un récepteur optique constitué d'une photodiode 62 à 64, et d'un amplificateur 72 à 74. Le premier signal électrique fugitif non retardé issu de l'amplificateur 31 et les signaux électriques retardés fournis par les récepteurs optiques 62-72 à 64-74 sont appliqués aux entrées de données d'un multiplexeur électrique MUX de tout type connu. Les entrées de commande du multiplexeur MUX reçoivent des signaux de commande S'1 à S'3. La sortie du multiplexeur fournit le signal multiplexé à l'entrée 35, 36 de la liaison optique de grande qualité. Un déclencheur-séquenceur 15' similaire au circuit 15 de la figure 2 fournit les signaux S'1 à S'3 à partir des signaux fugitifs des entrées E1 à E4.

Pour la clarté de l'explication, on a symbolisé le multiplexeur MUX par trois commutateurs 81 à 83 commandés respectivement par les signaux de commande S'1 à S'3.

Le fonctionnement est le suivant en se reportant également aux diagrammes de signaux de la figure 9.

A l'instant d'apparition des signaux fugitifs noté $\underline{0}$, les signaux S'1 et S'3 passent à une valeur correspondant aux positions des commutateurs 81 et 83 représentées sur la figure 8. Le premier signal fugitif non retardé est donc transmis vers la sortie entre les instants 0 et $T_o$. A l'instant $T_o$, le signal S'1 retombe à un valeur correspondant à l'autre position du commutateur 81 cependant que le commutateur 83 ne change pas puisque le signal S'3 reste à la même valeur. Le premier signal fugitif retardé venant de l'amplificateur 72 est donc transmis vers la sortie entre les instants $T_o$ et $2\,T_o$. A l'instant $2\,T_o$, le signal S'3 retombe à une valeur correspondant à l'autre position du commutateur 83 cependant que le signal S'2 passe à une valeur correspondant à la position du commutateur 82 non représentée sur la figure 8. Le second signal fugitif retardé venant de l'amplificateur 73 est donc transmis vers la sortie entre les instants $2\,T_o$ et $3\,T_o$.

Enfin à partir de l'instant $3\,T_o$, c'est le signal retardé issu de la dernière voie 64, 74 qui sera transmis en permanence, ce qui permet de transmettre un signal plus long ou sa décroissance, le cas échéant.

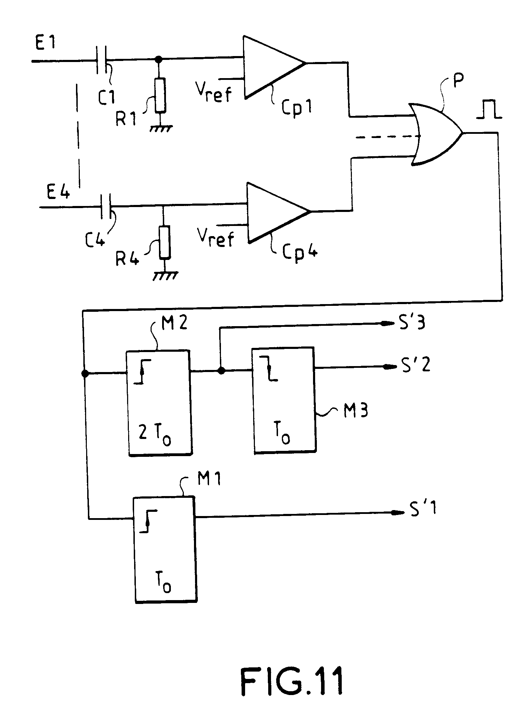

La réalisation du circuit déclencheur-séquenceur 15' de la figure 11 est identique à celle du circuit 15 de la figure 2 pour ce qui concerne l'élaboration de l'impulsion de déclenchement. Celle-ci est envoyée sur l'entrée de déclenchement de deux monostables M1 et M2 de durée respective $T_o$ (pour fournir S'1) et $2\,T_o$ (pour fournir S'3). Un troisième monostable M3 de durée $T_o$ reçoit le signal S'3 et est déclenché sur le front descendant de ce signal pour fournir le signal de commande S'2.

La figure 10 illustre les diagrammes de signaux de commande S"1 à S"3 pouvant remplacer les signaux S'1 à S'3 respectivement, pour transmettre tout d'abord la montée rapide de chaque signal sur une durée $T_o$ puis pour explorer en permanence par échantillonnage ces signaux avec une période $T_1$. Sur la figure 10, on a pris, pour la généralité de l'exemple, $T_1$ supérieur à $4\,T_o$. Mais il est clair que l'on prendra de préférence $T_1$ égal à $NT_o$.

Un tel mode de fonctionnement est particulièrement adapté au cas de signaux fugitifs présentant un front de montée très rapide (nécessitant une grande bande passante) suivi d'une évolution lente.

Bien entendu, les exemples de réalisation décrits ne sont nullement limitatifs de l'invention. Ainsi, si les circonstances le justifiaient, il n'est pas exclu de prévoir N lignes à retard et non (N-1), tous les signaux fugitifs étant traités de manière identique.

## Revendications

1. Dispositif de transmission optique de N signaux analogiques fugitifs sensiblement simultanés à large bande passante, du type utilisant un moyen de liaison (35 à 39, Fb1) comportant une fibre optique unique (Fb1) à large bande pour la transmission à distance de tous ces signaux et des moyens de multiplexage desdits N signaux du côté émission de la fibre, lesdits moyens de multiplexage comportant des moyens de conversion électro-optiques (32 à 34, 52 à 54) pour convertir au moins (N-1) desdits signaux fugitifs en signaux lumineux et des lignes à retard optiques à large bande (Fb2 à Fb4) pour imposer auxdits signaux lumineux des retards respectifs différents, ledit dispositif étant caractérisé en ce que ledit moyen de liaison comprend un émetteur optique (35, 36) de grande qualité pour fournir les signaux optiques à transmettre par ladite fibre optique unique (Fb1) et en ce que lesdits moyens de multiplexage comprennent en outre des moyens (25 à 27, 41 ; 25 à 27, 56 ; 62 à 64, 72 à 74, MUX) de combinaison et de conversion opto-électrique pour former par multiplexage dans le temps, à partir desdits signaux lumineux retardés et le cas échéant du signal fugitif non retardé, un signal électrique résultant appliqué pour transmission audit émetteur optique (35, 36).

2. Dispositif selon la revendication 1, caractérisé en ce que lesdites lignes à retard comprennent (N-1) fibres optiques (Fb2 à Fb4) de longueur différentes telles que les retards qu'elles apportent entre deux fibres successives diffèrent d'une valeur $T_o$, où $T_o$ est la durée initiale des signaux fugitifs que l'on désire transmettre.

3. Dispositif selon la revendication 2, caractérisé en ce que la longueur de la fibre (Fb2) la plus courte est choisie de façon que le retard qu'elle apporte soit égal à $T_o$.

4. Dispositif selon l'une quelconque des revendications 1 à 3, caractérisé en ce que lesdits moyens de conversion électro-optiques comprennent (N-1) émetteurs optiques (32 à 34, 52 à 54) pour convertir lesdits (N-1) signaux Fugitifs en (N-1) signaux lumineux injectés respectivement dans lesdites (N-1) fibres optiques (Fb2 à Fb4).

5. Dispositif selon la revendication 4, caractérisé en ce que lesdits moyens de combinaison et de conversion opto-électrique comprennent :
   - un coupleur optique (25) pour combiner les signaux fournis par lesdites (N-1) fibres optiques (Fb2 à Fb4) ;
   - un récepteur optique (Ro1) à photodiode (26) pour convertir en un signal électrique intermédiaire le signal optique fourni par ledit coupleur optique (25) ; et
   - un commutateur (41) pour appliquer à l'entrée dudit moyen de liaison (35 à 39, Fb1) alternativement ledit signal fugitif non retardé et ledit signal intermédiaire sous la commande d'un premier signal de commande (S1).

6. Dispositif selon la revendication 5, caractérisé en ce que chacun desdits émetteurs optiques (32 à 34, 52 à 54) est relié en série avec un interrupteur (42 à 44), ces interrupteurs étant commandés respectivement par (N-1) signaux de commande (S2 à S4) et en ce qu'il est prévu en outre un circuit déclencheur-séquenceur (15) recevant au moins un desdits signaux fugitifs et fournissant ledit premier signal de commande et lesdits (N-1) signaux de commande.

7. Dispositif selon la revendication 5, caractérisé en ce que (N-2) desdits émetteurs optiques sont reliés en série respectivement avec des interrupteurs commandés par (N-2) signaux de commande, le dernier émetteur optique (34, 54) recevant directement le dernier signal fugitif, et en ce qu'il est prévu en outre un circuit déclencheur-séquenceur recevant au moins un desdits signaux fugitifs et fournissant ledit premier signal de commande et lesdits (N-2) signaux de commande.

8. Dispositif selon la revendication 6, caractérisé en ce que ledit circuit déclencheur-séquenceur (15) est prévu pour que tous les signaux de commande (S1 à S4) soient des signaux de durée $T_o$ déclenchés à l'apparition desdits signaux fugitifs de manière que lesdits (N-1) interrupteurs (42 à 44) autorisent la conversion des signaux fugitifs par les émetteurs optiques pendant cette durée $T_o$ et que ledit commutateur (41) applique au moyen de liaison ledit signal fugitif non retardé pendant cette durée $T_o$ et ledit signal intermédiaire le reste du temps.

9. Dispositif selon la revendication 4, caractérisé en ce que lesdits moyens de combinaison et de conversion opto-électrique comprennent :
   - un coupleur optique (25) pour combiner les signaux fournis par lesdites (N-1) fibres optiques (Fb2 à Fb4) ;
   - un récepteur optique (Ro1) à photodiode (26) pour convertir en un signal électrique intermédiaire le signal optique fourni par ledit coupleur optique (25) ; et
   - un circuit sommateur (56) pour appliquer à l'entrée dudit moyen de liaison (35 à 39, Fb1) la somme dudit signal fugitif non retardé et dudit signal intermédiaire.

10. Dispositif selon la revendication 9, caractérisé en ce que chacun desdits émetteurs optiques (32 à 34, 52 à 54) est précédé d'un interrupteur (55.2 à 55.4), en ce que la voie transmettant le signal fugitif non retardé vers ledit circuit sommateur (56) comporte également un interrupteur (55.1) et en ce qu'il est prévu en outre un circuit déclencheur-séquenceur (15) recevant au moins un desdits signaux fugitifs et fournissant des signaux de commande de tous lesdits interrupteurs.

11. Dispositif selon la revendication 9, caractérisé en ce que les (N-2) premiers émetteurs optiques sont précédés respectivement d'un interrupteur, en ce que la voie transmettant le signal fugitif non retardé vers ledit circuit sommateur comporte également un interrupteur et en ce qu'il est prévu en outre un circuit déclencheur-séquenceur recevant au moins un desdits signaux fugitifs et fournissant des signaux de commande de tous lesdits interrupteurs.

12. Dispositif selon l'une des revendications 10 ou 11, caractérisé en ce que ledit circuit déclencheur-séquenceur (15) est prévu pour que tous les signaux de commande (S) soient de durée $T_o$ déclenchés à l'apparition desdits signaux fugitifs.

13. Dispositif selon la revendication 4, caractérisé en ce que lesdits moyens de combinaison et de conversion opto-électrique comprennent :
   - (N-1) récepteurs optiques (62 à 64, 72 à 74) pour convertir en (N-1) signaux électriques retardés les signaux lumineux fournis par lesdites fibres optiques (Fb2 à Fb4) ;
   - un multiplexeur électrique (MUX) à N entrées de signal recevant respectivement sur ses entrées lesdits (N-1) signaux électriques retardés et ledit signal fugitif non retardé et dont la sortie est reliée à l'entrée dudit moyen de liaison (35 à 39, Fb1) ; et
   - un circuit déclencheur-séquenceur (15') recevant au moins un desdits signaux fugitifs et fournissant aux entrées de commande dudit multiplexeur (MUX) des signaux de commande (S'1 à S'3) pour multiplexer dans le temps avec des moments de durée $T_o$ les signaux présents sur lesdites N entrées du multiplexeur (MUX).

14. Dispositif selon l'une quelconque des revendications 6, 8, 10, 12 ou 13, caractérisé en ce que ledit circuit déclencheur-séquenceur (15 ; 15') est prévu pour fournir lesdits signaux de commande (S1 à S4 ; S ; S''1 à S''3) sous forme périodique avec une périodicité au moins égale à $NT_o$.

FIG.1

FIG.3

FIG.2

E1

E2

E3

E4

11    21    31

12    22    32    S2

Fibres optiques

13    23    33    S3

Coupleur optique    Ro1

26    27    IS1    35

14    24    34    S4

25    36 Laser ou LED

S2    42    Fb2

S3    43    Fb3

S4    44    Fb4    37

Protections    Atténuateurs

Séquenceur    S1    S2    S3    S4

15

Fibre de liaison

Fbl

Ro2    40

38    39

Réception

EP 0 544 564 A1

9

FIG.4

(a)

(b)

FIG.5

FIG.6

FIG.7

FIG.8

FIG.9

FIG.10

FIG.11

Office européen
des brevets

**RAPPORT DE RECHERCHE EUROPEENNE**

Numero de la demande

EP    92 40 3109
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 450 539 (COMPAGNIE LYONNAISE DE TRANSMISSIONS OPTIQUES) | 1,2,4 | H04J14/08 |
| Y | * page 1, ligne 18 - page 2, ligne 22 * | 3 | |
| A | * page 2, ligne 36 - page 3, ligne 6 * | 5-14 | |
| | --- | | |
| A | WO-A-8 605 343 (BRITISH TELECOMMUNICATIONS PUBLIC LIMITED COMPANY) | 1,2,4-14 | |
| Y | * page 1, ligne 20 - ligne 25 * <br> * page 1, ligne 33 - page 2, ligne 4 * <br> * page 2, ligne 14 - ligne 19 * <br> * page 2, ligne 30 - ligne 33 * <br> * page 4, ligne 28 - page 5, ligne 26 * <br> * page 6, ligne 1 - ligne 13 * | 3 | |
| | --- | | |
| A | WO-A-8 504 064 (AMERICAN TELEPHONE AND TELEGRAPH COMPANY) <br> * page 2, ligne 30 - page 3, ligne 17 * <br> * page 4, ligne 7 - ligne 27 * <br> * page 6, ligne 32 - ligne 15 * <br> * page 8, ligne 20 - ligne 25 * <br> * page 10, ligne 15 - ligne 23 * | 1-14 | |
| | --- | | **DOMAINES TECHNIQUES RECHERCHES (Int. Cl.5)** |
| A | JOURNAL OF LIGHTWAVE TECHNOLOGY. <br> vol. 6, no. 11, 1 Novembre 1988, NEW YORK US <br> pages 1737 - 1749 <br> RODNEY S. TUCKER 'oPTICAL TIME-DIVISION MULTIPLEXING FOR VERY HIGH BITRATE TRANSMISSION.' <br> * page 1738, colonne 1, ligne 9 - colonne 1, ligne 43 * <br> * page 1738, colonne 2, ligne 28 - page 1739, colonne 1, ligne 10 * <br> * page 1739, colonne 1, ligne 47 - ligne 57 * <br> * page 1739, colonne 2, ligne 10 - ligne 21 * | 1-14 | H04J <br> H04B |

-/--

Le présent rapport a été établi pour toutes les revendications

| Lieu de la recherche | Date d'achèvement de la recherche | Examinateur |
|---|---|---|
| LA HAYE | 28 JANVIER 1993 | VAN DEN BERG J.G.J. |

**Office européen
des brevets**

# RAPPORT DE RECHERCHE EUROPEENNE

Numero de la demande

EP    92 40 3109
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | ELECTRONIC ENGINEERING.<br>vol. 52, no. 638, 1 Mai 1980, LONDON GB<br>PRAKESH DANDEKAR 'A simple N-to-1 channel analoque multiplexer'<br>* en entier *<br><br>----- | 9 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 28 JANVIER 1993 | VAN DEN BERG J.G.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P0402)

15